# EUROPÄISCHE PATENTSCHRIFT

(11) **EP 4 093 954 B1**
(45) Veröffentlichungstag und Bekanntmachung des Hinweises auf die Patenterteilung: **04.09.2024**
(21) Anmeldenummer: 20820797.7
(22) Anmeldetag: 25.11.2020
(51) Int. Cl.: F01N 3/20, F16K 27/00, F16K 27/02, F16K 31/06

(54) **VENTILEINRICHTUNG, PUMPENMODUL, ABGASNACHBEHANDLUNGSSYSTEM**
VALVE ASSEMBLY, PUMP MODULE, EXHAUST GAS AFTERTREATMENT SYSTEM
ENSEMBLE SOUPAPE, MODULE DE POMPE, SYSTÈME DE POST-TRAITEMENT DES GAZ D'ÉCHAPPEMENT

(30) Priorität: 22.01.2020 DE 102020200755
(43) Veröffentlichungstag der Anmeldung: 30.11.2022
(73) Patentinhaber: Robert Bosch GmbH, 70442 Stuttgart (DE)
(72) Erfinder: HOFMANN, Manfred, 90559 Mimberg (DE); KELLNER, Andreas, 71732 Tamm (DE); SCHIFFERMUELLER, Helmut, 91126 Schwabach (DE)
(86) Internationale Anmeldenummer: PCT/EP2020/083322
(87) Internationale Veröffentlichungsnummer: WO 2021/148167

(56) Entgegenhaltungen:
- EP-A1- 2 500 610
- EP-B1- 2 500 610
- WO-A1-2005/114018
- WO-A1-2010/040470
- WO-A1-2014/175868

## Beschreibung

Die Erfindung betrifft eine Ventileinrichtung, mit einem Gehäuse, durch das zumindest ein Fluidpfad, und mit einer dem Fluidpfad zugeordneten Verschlusseinheit, wobei die Verschlusseinheit ein Verschlusselement aufweist, das bezogen auf eine Längsmittelachse der Verschlusseinheit axial verschiebbar gelagert ist, wobei ein Durchströmungsquerschnitt des Fluidpfads in einer ersten Schiebestellung des Verschlusselementes geschlossen und in einer zweiten Schiebestellung des Verschlusselementes freigegeben ist, und wobei eine Rückstellfeder zwischen dem Verschlusselement einerseits und einem Stützelement andererseits axial derart vorgespannt gehalten ist, dass das Verschlusselement ausgehend von der ersten Schiebestellung entgegen einer Federkraft der Rückstellfeder axial verschiebbar ist.

Außerdem betrifft die Erfindung ein Pumpenmodul mit einer Ventileinrichtung der eingangs genannten Art.

Ferner betrifft die Erfindung ein Abgasnachbehandlungssystem mit einem derartigen Pumpenmodul.

### Stand der Technik

Um Stickoxide, die im Abgasstrom einer Brennkraftmaschine eines Kraftfahrzeugs enthalten sind, zu elementarem Stickstoff zu reduzieren, ist es bekannt, ein flüssiges Abgasnachbehandlungsmittel mittels eines Abgasnachbehandlungssystems in eine Abgasleitung des Kraftfahrzeugs einzudosieren. Als flüssiges Abgasnachbehandlungsmittel wird dabei oftmals eine wässrige Harnstofflösung eingesetzt.

Um eine gezielte Förderung des Abgasnachbehandlungsmittels zu erreichen, weist ein Abgasnachbehandlungssystem oftmals eine Ventileinrichtung der eingangs genannten Art auf. Die Ventileinrichtung weist ein Gehäuse auf, durch das zumindest ein Fluidpfad für das Abgasnachbehandlungsmittel führt. Um einen Durchströmungsquerschnitt des Fluidpfads wahlweise zu schließen oder freizugeben, weist die Ventileinrichtung eine dem Fluidpfad zugeordnete und betätigbare Verschlusseinheit auf. Die Verschlusseinheit weist ein Verschlusselement auf, das bezogen auf eine Längsmittelachse der Verschlusseinheit axial verschiebbar gelagert ist. In einer ersten Schiebestellung des Verschlusselementes ist der Durchströmungsquerschnitt des Fluidpfads geschlossen. In einer zweiten Schiebestellung des Verschlusselementes ist der Fluidpfad freigegeben, sodass das Abgasnachbehandlungsmittel den Fluidpfad durchströmen kann. In der Regel weist die Verschlusseinheit eine Rückstellfeder auf, die zwischen dem Verschlusselement einerseits und einem Stützelement andererseits axial derart vorgespannt gehalten ist, dass das Verschlusselement ausgehend von der ersten Schiebestellung entgegen einer Federkraft der Rückstellfeder axial verschiebbar ist. Bei vorbekannten Ventileinrichtungen ist das Stützelement Teil des Gehäuses der Ventileinrichtung oder mit dem Gehäuse fest verbunden.

Eine handelsübliche wässrige Harnstofflösung gefriert in der Regel bei einer Temperatur von unter -11 °C. Die Harnstofflösung dehnt sich beim Gefrieren aus, sodass die Harnstofflösung im gefrorenen Zustand ein größeres Volumen einnimmt als im flüssigen Zustand. Durch die Volumenvergrößerung können Teile des Abgasnachbehandlungssystems beschädigt werden. Um eine Beschädigung der Ventileinrichtung durch gefrierende Harnstofflösung zu vermeiden, wird üblicherweise nach dem Abstellen des Kraftfahrzeugs die wässrige Harnstofflösung aus der Ventileinrichtung in einen Tank des Abgasnachbehandlungssystems rückgesaugt.

Das Dokument WO 2010/040470A1 offenbart eine Ventileinrichtung nach dem Stand der Technik.

### Offenbarung der Erfindung

Die erfindungsgemäße Ventileinrichtung mit den Merkmalen des Anspruchs 1 hat den Vorteil, dass die Ventileinrichtung vor einer Beschädigung durch gefrierende Harnstofflösung geschützt ist. Erfindungsgemäß ist hierzu vorgesehen, dass das Stützelement axial verschiebbar gelagert ist, wobei ein Federelement vorgesehen ist, das zwischen dem Stützelement einerseits und dem Gehäuse andererseits axial vorgespannt gehalten ist, und wobei eine Federkonstante des Federelementes größer ist als eine Federkonstante der Rückstellfeder. Die Rückstellfeder und das Federelement sind also in Reihe geschaltet, wobei das Stützelement zwischen der Rückstellfeder und dem Federelement angeordnet ist. Gefriert wässrige Harnstofflösung, die beispielsweise in dem Fluidpfad oder in einem Federraum, in dem die Rückstellfeder angeordnet ist, vorhanden ist, so dehnt sich die Harnstofflösung aus und übt eine Kraft auf das Stützelement aus. Übersteigt die auf das Stützelement ausgeübte Kraft die Federkraft des Federelementes, so wird das Stützelement unter Stauchung des Federelementes axial verlagert. Hierdurch wird ein für die Harnstofflösung zur Verfügung stehendes Volumen gesteigert. Weil die erfindungsgemäße Ventileinrichtung vor gefrierender Harnstofflösung geschützt ist, ist es nicht notwendig, nach dem Abstellen des Kraftfahrzeugs die Harnstofflösung aus der Ventileinrichtung rückzusaugen. Entsprechend muss die Ventileinrichtung im Anschluss an einen erneuten Start des Kraftfahrzeugs nicht erst mit Harnstofflösung befüllt werden, bevor ein Einzudosieren der Harnstofflösung in die Abgasleitung erfolgen kann. Weil die Federkonstante des Federelementes größer ist als die Federkonstante der Rückstellfeder, wird im Normalbetrieb der Ventileinrichtung bei der Verlagerung des Verschlusselementes von der ersten Schiebestellung in die zweite Schiebestellung die Rückstellfeder gestaucht und nicht das Federelement. Vorzugsweise weist das Gehäuse im Bereich des Fluidpfads einen Ventilsitz auf, an dem eine Dichtfläche des Verschlusselementes dichtend anliegt, wenn sich das Verschlusselement in der ersten Schiebestellung befindet. Die Richtung, in die das Verschlusselement ausgehend von der ersten Schiebestellung in die zweite Schiebestellung verschoben wird, wird als Freigaberichtung bezeichnet. Vorzugsweise ist das Federelement zwischen einer in Freigaberichtung vorderen Seite des Stützelementes einerseits und einem der vorderen Seite entgegengesetzten Axialanschlag des Gehäuses andererseits axial vorgespannt.

Gemäß einer bevorzugten Ausführungsform ist vorgesehen, dass das Verschlusselement mit einem Magnetanker gekoppelt ist, wobei die Verschlusseinheit einen ansteuerbaren Elektromagnet zur axialen Verlagerung des Magnetankers aufweist. Bei der Verschlusseinheit handelt es sich demnach um ein Magnetventil. Durch eine derartige Ausgestaltung der Verschlusseinheit ist das Verschlusselement präzise und berührungslos zum wahlweisen Schließen oder Freigeben des Durchströmungsquerschnitts des Fluidpfads axial verlagerbar. Vorzugsweise ist der Elektromagnet als Ringmagnet ausgebildet, der koaxial zu dem Stützelement angeordnet ist. Besonders bevorzugt umschließt der Elektromagnet das Stützelement radial. Sind zwei Elemente miteinander gekoppelt, so ist eine starre Verbindung zwischen diesen Elementen vorhanden.

Vorzugsweise ist der Elektromagnet entgegen der Federkraft des Federelementes axial verlagerbar. Weil auch der Elektromagnet axial verlagerbar ist, kann durch die gemeinsame Verlagerung des Elektromagneten und des Stützelementes das Volumen für die gefrierende Harnstofflösung stärker vergrößert werden als durch die alleinige axiale Verlagerung des Stützelementes. Vorzugsweise ist der Elektromagnet mit dem Stützelement mitverschiebbar verbunden, beispielsweise durch eine Formschlussverbindung. Alternativ dazu sind der Elektromagnet und das Stützelement vorzugsweise relativ zueinander axial verlagerbar.

Gemäß einer alternativen Ausführungsform ist der Elektromagnet vorzugsweise gehäusefest angeordnet. Der Elektromagnet kann dann eine sichere radiale Führung für das Stützelement bereitzustellen.

Gemäß einer bevorzugten Ausführungsform ist vorgesehen, dass das Stützelement einen Hülsenabschnitt aufweist, wobei das Verschlusselement und/oder der Magnetanker in dem Hülsenabschnitt axial verschiebbar gelagert sind. Durch die Lagerung des Verschlusselementes und oder des Magnetankers in dem Hülsenabschnitt ist im Normalbetrieb der Verschlusseinheit eine besonders präzise axiale Verschiebung des Verschlusselementes möglich. Besonders bevorzugt ist das Stützelement becherförmig ausgebildet. Das Stützelement weist dann den Hülsenabschnitt und einen Boden auf, wobei das Federelement axial an einer von dem Hülsenabschnitt abgewandten Seite des Bodens anliegt.

Vorzugsweise weist die Ventileinrichtung eine Stützscheibe auf, wobei sich das Stützelement und/oder der Elektromagnet mittels der Stützscheibe axial an dem Federelement abstützen. Die Stützscheibe ist also axial zwischen dem Federelement einerseits und dem Stützelement und/oder dem Elektromagnet andererseits angeordnet. Durch die Stützscheibe ist eine gleichzeitige Übertragung der Federkraft des Federelementes auf den Elektromagnet und das Stützelement sicher gewährleistet.

Die Ventileinrichtung weist einen weiteren Fluidpfad und eine dem weiteren Fluidpfad zugeordnete weitere Verschlusseinheit auf. Vorzugsweise ist die weitere Verschlusseinheit der vorstehend beschriebenen Verschlusseinheit entsprechend ausgebildet. Die weitere Verschlusseinheit weist also ein weiteres Verschlusselement mit einer ersten Schiebestellung und einer zweiten Schiebestellung auf, wobei in der ersten Schiebestellung ein Durchströmungsquerschnitt des weiteren Fluidpfads geschlossen und in der zweiten Schiebestellung freigegeben ist.

Die weitere Verschlusseinheit weist ein weiteres Stützelement auf, wobei das Federelement zwischen dem Stützelement und dem weiteren Stützelement einerseits und dem Gehäuse andererseits axial vorgespannt gehalten ist. Beiden Stützelementen ist also dasselbe Federelement zugeordnet. Das Vorsehen eines weiteren Federelementes ist demnach nicht notwendig, um die Ventileinrichtung auch im Hinblick auf die weitere Verschlusseinheit vor gefrierender Harnstofflösung zu schützen. Vorzugsweise sind die Verschlusseinheit, die weitere Verschlusseinheit und das Federelement bezüglich einer Gerade, die parallel zu der Längsmittelachse der Verschlusseinheit und durch einen Mittelpunkt des Federelementes verläuft, rotationssymmetrisch ausgebildet.

Vorzugsweise ist das Federelement als Federplatte ausgebildet. Das Federelement ist dadurch bauraumsparend ausgebildet und einfach in die Ventileinrichtung integrierbar. Insbesondere weist das Federelement bedingt durch die Ausbildung als Federplatte eine geringe Axialerstreckung auf.

Gemäß einer bevorzugten Ausführungsform ist vorgesehen, dass die Federplatte einen planaren Mittelabschnitt aufweist, wobei die Federplatte mittels des planaren Mittelabschnitts mittelbar oder unmittelbar an dem der vorderen Seite des Stützelementes entgegengesetzten Axialanschlag des Gehäuses anliegt. Vorzugsweise weist die Federplatte einen auf der einen Seite des Mittelabschnitts gelegenen ersten Seitenabschnitt und einen auf der anderen Seite des Mittelabschnitts gelegenen zweiten Seitenabschnitt auf, wobei die Seitenabschnitte schräg zu dem Mittelabschnitt verlaufen, wobei die Federplatte mittels des ersten Seitenabschnitts mittelbar oder unmittelbar an der in Freigaberichtung vorderen Seite des Stützelementes anliegt, und wobei die Federplatte mittels des zweiten Seitenabschnitts mittelbar oder unmittelbar an der in Freigaberichtung vorderen Seite des weiteren Stützelementes anliegt. Vorzugsweise ist die Federplatte H-förmig, Doppel-W-förmig oder X-förmig ausgebildet.

Das erfindungsgemäße Pumpenmodul mit den Merkmalen des Anspruchs 9 weist eine Pumpeneinrichtung mit einer Fluidkammer und die erfindungsgemäße Ventileinrichtung auf, wobei die Fluidkammer und die Ventileinrichtung fluidtechnisch miteinander verbunden sind. Dies ist derart zu verstehen, dass der Fluidpfad und/oder der weitere Fluidpfad der Ventileinrichtung in die Fluidkammer münden. Auch daraus ergeben sich die bereits genannten Vorteile. Weitere bevorzugte Merkmale und Merkmalskombinationen ergeben sich aus dem zuvor Beschriebenen sowie aus den Ansprüchen.

Vorzugsweise ist ein Zulauf der Fluidkammer mit dem Fluidpfad und ein Ablauf der Fluidkammer mit dem weiteren Fluidpfad verbunden. Weil die Fluidpfade mit dem Ablauf bzw. dem Zulauf der Fluidkammer verbunden sind, ist durch eine geeignete Ansteuerung der Ventileinrichtung und der Pumpeneinrichtung eine gezielte Förderung der Harnstofflösung durch das Pumpenmodul möglich. Vorzugsweise ist das Pumpenmodul als Membranpumpenmodul ausgebildet. Zumindest eine Wand der Fluidkammer ist dann zumindest bereichsweise durch eine verformbare Membran gebildet, sodass ein Volumen der Fluidkammer durch eine Verformung der Membran veränderbar ist. Die Ausbildung des Pumpenmoduls als Membranpumpenmodul ist besonders vorteilhaft, weil dann auch die Pumpeneinrichtung vor in der Fluidkammer gefrierender Harnstofflösung geschützt ist.

Das erfindungsgemäße Abgasnachbehandlungssystem mit den Merkmalen des Anspruchs 11 weist einen Tank für ein flüssiges Abgasnachbehandlungsmittel, eine Dosiereinrichtung, die dazu ausgebildet ist, das flüssige Abgasnachbehandlungsmittel in eine Abgasleitung eines Kraftfahrzeugs einzudosieren, und das erfindungsgemäße Pumpenmodul auf, wobei das Pumpenmodul dazu ausgebildet ist, das Abgasnachbehandlungsmittel von dem Tank zu der Dosiereinrichtung zu fördern. Auch daraus ergeben sich die bereits genannten Vorteile. Weitere bevorzugte Merkmale und Merkmalskombinationen ergeben sich aus dem zuvor Beschriebenen sowie aus den Ansprüchen

Im Folgenden wird die Erfindung anhand der Zeichnungen näher erläutert. Dazu zeigen
- Figur 1: ein Abgasnachbehandlungssystem,
- Figur 2: ein Pumpenmodul des Abgasnachbehandlungssystems und
- Figur 3A: ein Federelement des Pumpenmoduls gemäß einem ersten Ausführungsbeispiel,
- Figur 3B: das Federelement gemäß einem zweiten Ausführungsbeispiel und
- Figur 3C: das Federelement gemäß einem dritten Ausführungsbeispiel.

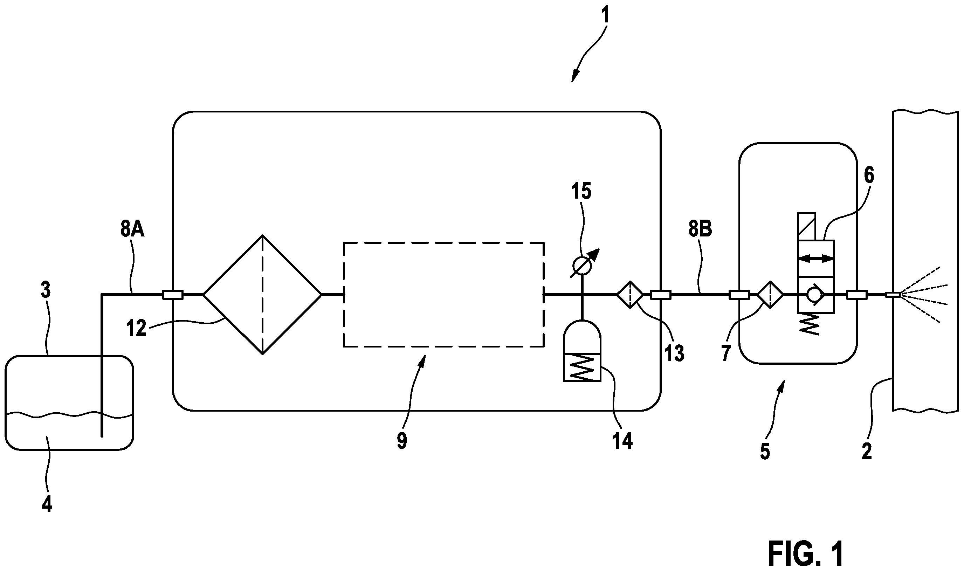

Figur 1 zeigt in einer schematischen Darstellung ein Abgasnachbehandlungssystem 1. Das Abgasnachbehandlungssystem 1 ist Teil eines Kraftfahrzeugs und dazu ausgebildet, ein flüssiges Abgasnachbehandlungsmittel 4 in eine Abgasleitung 2 des Kraftfahrzeugs einzudosieren. Das Abgasnachbehandlungssystem 1 weist einen Tank 3 auf, in dem das flüssige Abgasnachbehandlungsmittel 4, vorliegend eine wässrige Harnstofflösung 4, gelagert ist. Das Abgasnachbehandlungssystem 1 weist außerdem eine Dosiereinrichtung 5 mit einem Dosierventil 6 und einem dem Dosierventil 6 vorgeschalteten Filter 7 auf.

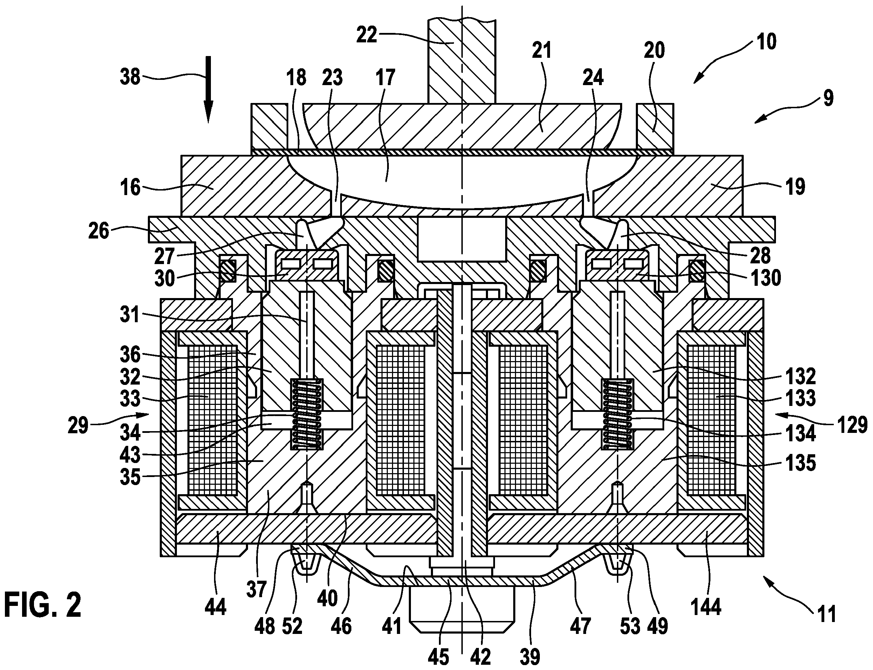

Um die wässrige Harnstofflösung 4 von dem Tank 3 zu der Dosiereinrichtung 5 zu fördern, weist das Abgasnachbehandlungssystem 1 ein Pumpenmodul 9 auf. Das Pumpenmodul 9 ist durch eine erste Fluidleitung 8A fluidtechnisch mit dem Tank 3 verbunden. Außerdem ist das Pumpenmodul 9 durch eine zweite Fluidleitung 8B fluidtechnisch mit der Dosiereinrichtung 5 verbunden. Das Pumpenmodul 9 ist in Figur 1 lediglich schematisch dargestellt und wird mit Bezug auf Figur 2 näher beschrieben.

Die erste Fluidleitung 8A weist einen Hauptfilter 12 auf, der zwischen dem Tank 3 und dem Pumpenmodul 9 angeordnet ist. Die zweite Fluidleitung 8B weist einen weiteren Filter 13 auf, der zwischen dem Pumpenmodul 9 und der Dosiereinrichtung 5 angeordnet ist.

Das Abgasnachbehandlungssystem 1 weist außerdem einen Pulsationsdämpfer 14 auf. Der Pulsationsdämpfer 14 ist fluidtechnisch mit der zweiten Fluidleitung 8B verbunden.

Das Abgasnachbehandlungssystem 1 weist außerdem einen Drucksensor 15 auf. Der Drucksensor 15 ist fluidtechnisch mit der zweiten Fluidleitung 8B verbunden.

In Figur 2 ist eine Schnittdarstellung des Pumpenmoduls 9 gezeigt. Das Pumpenmodul 9 weist eine Pumpeneinrichtung 10 und eine Ventileinrichtung 11 auf und ist als Membranpumpenmodul 9 ausgebildet.

Die Pumpeneinrichtung 10 weist ein Pumpengehäuse 16 auf. In dem Pumpengehäuse 16 ist eine Fluidkammer 17 ausgebildet. Die Fluidkammer 17 ist durch eine verformbare Membran 18 begrenzt. Die Membran 18 ist bezüglich des Pumpengehäuses 16 gehäusefest angeordnet. Vorliegend ist die Membran 18 zwischen einem ersten Teil 19 des Pumpengehäuses 16 und einem zweiten Teil 20 des Pumpengehäuses 16 eingeklemmt. Durch eine Verformung der Membran 18 kann ein Volumen der Fluidkammer 17 wahlweise vergrößert oder verkleinert werden. Um die Membran 18 zu verformen, ist die Membran 18 mit einem Druckkopf 21 gekoppelt. Der Druckkopf 21 ist wiederum mit einem Schaft 22 gekoppelt, der durch einen nicht dargestellten Elektromotor axial verlagerbar ist. Um den Schaft 22 axial zu verlagern, ist beispielsweise eine Exzenterwelle vorgesehen, wobei der Schaft 22 durch die Exzenterwelle mit dem Elektromotor verbunden ist.

Das Pumpengehäuse 16 weist außerdem einen in die Fluidkammer 17 mündenden Zulauf 23 und einen aus der Fluidkammer 17 herausführenden Ablauf 24 auf.

Die Ventileinrichtung 11 weist ein Gehäuse 26 auf. Das Gehäuse 26 ist mit dem Pumpengehäuse 16 fest verbunden.

Das Gehäuse 26 weist einen Fluidpfad 27 auf, der durch das Gehäuse 26 führt. Ein erstes Ende des Fluidpfads 27 ist fluidtechnisch mit dem Zulauf 23 des Pumpengehäuses 16 verbunden. Ein zweites Ende des Fluidpfads 27 weist eine nicht dargestellte Anschlusseinrichtung auf. Mittels dieser Anschlusseinrichtung ist der Fluidpfad 27 mit der ersten Fluidleitung 8A fluidtechnisch verbindbar/verbunden. Mittels des Fluidpfads 27 ist die erste Fluidleitung 8A demnach fluidtechnisch mit der Fluidkammer 17 verbindbar/verbunden.

Das Gehäuse 26 weist außerdem einen weiteren Fluidpfad 28 auf, der durch das Gehäuse 26 führt. Ein erstes Ende des weiteren Fluidpfads 28 ist fluidtechnisch mit dem Ablauf 24 des Pumpengehäuses 16 verbunden. Ein zweites Ende des weiteren Fluidpfads 28 weist eine nicht dargestellte weitere Anschlusseinrichtung auf. Mittels dieser weiteren Anschlusseinrichtung ist der weitere Fluidpfad 28 mit der zweiten Fluidleitung 8B fluidtechnisch verbindbar/verbunden. Mittels des weiteren Fluidpfads 28 ist die zweite Fluidleitung 8B demnach fluidtechnisch mit der Fluidkammer 17 verbindbar/verbunden.

Die Ventileinrichtung 11 weist eine dem Fluidpfad 27 zugeordnete Verschlusseinheit 29 auf. Die Verschlusseinheit 29 weist ein Verschlusselement 30 auf, das bezogen auf eine Längsmittelachse 31 der Verschlusseinheit 29 axial verschiebbar gelagert ist. In einer ersten Schiebestellung des Verschlusselementes 30 ist ein Durchströmungsquerschnitt des Fluidpfads 27 durch das Verschlusselement 30 verschlossen. Diese erste Schiebestellung ist in Figur 2 dargestellt. In einer zweiten Schiebestellung des Verschlusselementes 30 ist der Durchströmungsquerschnitt des Fluidpfads 27 freigegeben. Wird das Verschlusselement 30 ausgehend von der ersten Schiebestellung in die zweite Schiebestellung verlagert, so wird das Verschlusselement 30 in eine Freigaberichtung 38 verlagert.

Das Verschlusselement 30 ist mit einem Magnetanker 32 gekoppelt. Um das Verschlusselement 30 axial zu verlagern, weist die Verschlusseinheit 29 einen ringförmigen Elektromagnet 33 auf, der den Magnetanker 32 radial umschließt, sodass der Magnetanker 32 und dadurch das Verschlusselement 30 durch eine geeignete Bestromung des Elektromagneten 33 axial verlagerbar sind.

Die Verschlusseinheit 29 weist außerdem eine Rückstellfeder 34 auf. Die Rückstellfeder 34 ist zwischen dem Magnetanker 32 einerseits und einem Stützelement 35 der Verschlusseinheit 29 andererseits derart axial vorgespannt, dass das Verschlusselement 30 ausgehend von der ersten Schiebestellung entgegen einer Federkraft der Rückstellfeder 34 in die zweite Schiebestellung axial verlagerbar ist.

Das Stützelement 35 ist becherförmig ausgebildet. Hierzu weist das Stützelement 35 einen Hülsenabschnitt 36 und einen Boden 37 auf. Der Magnetanker 32 ist in dem Hülsenabschnitt 36 axial verschiebbar gelagert. Die Rückstellfeder 34 liegt axial an dem Boden 37 des Stützelementes 35 an.

Das Stützelement 35 ist axial verschiebbar gelagert, wobei die Ventileinrichtung 11 ein Federelement 39 aufweist, das einer axialen Verschiebung des Stützelementes 35 in die Freigaberichtung 38 entgegensteht. Das Stützelement 35 ist also entgegen einer Federkraft des Federelementes 39 in die Freigaberichtung 38 axial verschiebbar. Entsprechend sind die Rückstellfeder 34 und das Federelement 39 zueinander in Reihe geschaltet.

Das Federelement 39 ist zwischen einer in Freigaberichtung 38 vorderen Seite 40 des Stützelementes 35 einerseits und einem der vorderen Seite 40 des Stützelementes 35 entgegengesetzten gehäusefesten Axialanschlag 41 axial vorgespannt gehalten. Vorliegend ist der gehäusefeste Axialanschlag 41 Teil eines Befestigungsstiftes 42, der mit dem Gehäuse 26 gekoppelt ist. Weil der Befestigungsstift 42 und das Gehäuse 26 miteinander gekoppelt sind, wird davon ausgegangen, dass der Befestigungsstift 42 und somit der gehäusefeste Axialanschlag 41 des Befestigungsstiftes 42 Teil des Gehäuses 26 sind. Das Federelement 39 ist also zwischen dem Stützelement 35 einerseits und dem Gehäuse 26 andererseits axial vorgespannt gehalten.

Eine Federkonstante des Federelementes 39 ist größer als eine Federkonstante der Rückstellfeder 34. Wird im Normalbetrieb der Ventileinrichtung 11 der Magnetanker 32 durch den Elektromagnet 33 in die Freigaberichtung 38 verschoben, so wird demnach die Rückstellfeder 34 gestaucht. Eine Stauchung des Federelementes 39 findet dabei nicht statt.

Sollte jedoch wässrige Harnstofflösung gefrieren, die in dem Fluidkanal 27 oder einem Federraum 43, der fluidtechnisch mit dem Fluidkanal 27 verbunden ist und in dem die Rückstellfeder 34 angeordnet ist, vorhanden ist, so kann dabei aufgrund der Volumenzunahme der Harnstofflösung ein auf das Stützelement 35 in Freigaberichtung 38 wirkender Druck entstehen, der ausreicht, um das Stützelement 35 unter Stauchung des Federelementes 39 in die Freigaberichtung 38 zu verschieben. Durch die Verschiebung des Stützelementes 35 in die Freigaberichtung 38 wird das für die Harnstofflösung verfügbare Volumen gesteigert und die Ventileinrichtung 11 ist vor einer Beschädigung durch die gefrierende Harnstofflösung geschützt.

Gemäß dem in Figur 2 dargestellten Ausführungsbeispiel ist der Elektromagnet 33 derart mit dem Stützelement verbunden, dass der Elektromagnet 33 bei einer Verschiebung des Stützelementes 35 in die Freigaberichtung 38 mit dem Stützelement 35 mitverschoben wird.

Die Verschlusseinheit 29 weist außerdem eine Stützscheibe 44 auf. Die Stützscheibe 44 ist zwischen dem Elektromagnet 33 und dem Stützelement 35 einerseits und dem Federelement 39 andererseits angeordnet. Das Federelement 39 liegt demnach axial nicht unmittelbar an der Seite 40 des Stützelementes 35 an, sondern mittelbar, nämlich mittels der Stützscheibe 44.

Die Ventileinrichtung 11 weist außerdem eine weitere Verschlusseinheit 129 auf, die dem weiteren Fluidpfad 28 zugeordnet ist, um einen Durchströmungsquerschnitt des weiteren Fluidpfads 28 wahlweise freizugeben oder zu sperren. Die weitere Verschlusseinheit 129 entspricht bezüglich ihrer Ausgestaltung der Verschlusseinheit 29. Entsprechend weist die weitere Verschlusseinheit 129 ein weiteres Verschlusselement 130, einen weiteren Magnetanker 132, einen weiteren Elektromagnet 133, eine weitere Rückstellfeder 134, ein weiteres Stützelement 135 und eine weitere Stützscheibe 144 auf. Auch das weitere Stützelement 135 ist entgegen der Federkraft des Federelementes 39 in die Freigaberichtung 38 verlagerbar. Das Stützelement 35 und das weitere Stützelement 135 sind bezüglich des Federelementes 39 parallel zueinander angeordnet.

Das Federelement 39 ist als Federplatte 39 ausgebildet. Die Federplatte 39 weist einen planaren Mittelabschnitt 45 auf. Mittels des planaren Mittelabschnitts 45 liegt die Federplatte 39 axial an dem Axialanschlag 41 an. Die Federplatte 39 weist außerdem einen ersten Seitenabschnitt 46 und einen zweiten Seitenabschnitt 47 auf, wobei die Seitenabschnitte 46, 47 von dem Mittelabschnitt 45 ausgehen. Die Seitenabschnitte 46, 47 verlaufen schräg zu dem planaren Mittelabschnitt 45, sodass freie Enden 48, 49 der Seitenabschnitte 46, 47 axial beabstandet von dem Mittelabschnitt 45 liegen. Mittels des freien Endes 48 des ersten Seitenabschnitts 46 liegt die Federplatte 39 axial an der Stützscheibe 44 an. Mittels des freien Endes 49 des zweiten Seitenabschnitts 47 liegt die Federplatte 39 axial an der weiteren Stützscheibe 144 an.

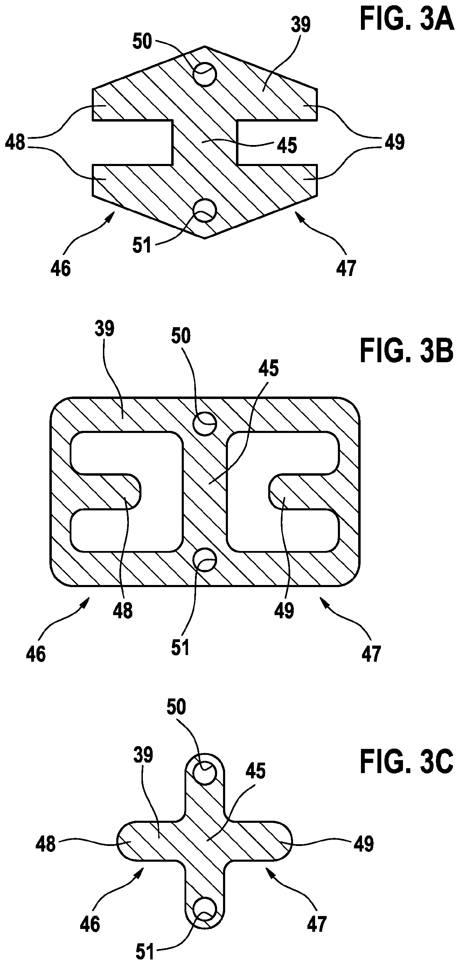

Die Figuren 3A bis 3C zeigen Draufsichten auf die Federplatte 39 gemäß verschiedenen Ausführungsbeispielen. Gemäß einem in Figur 3A dargestellten ersten Ausführungsbeispiel ist die Federplatte 39 H-förmig ausgebildet. Gemäß einem in Figur 3B dargestellten zweiten Ausführungsbeispiel ist die Federplatte 39 Doppel-W-förmig ausgebildet. Gemäß einem in Figur 3C dargestellten dritten Ausführungsbeispiel ist die Federplatte 39 X-förmig ausgebildet.

Der Mittelabschnitt 45 der in den Figuren 3A bis 3C dargestellten Federplatten 39 weist jeweils zwei Durchbrüche 50 und 51 auf. Ist die Federplatte 39 wie in Figur 2 dargestellt Teil der Ventileinrichtung 11, so werden die Durchbrüche 50, 51 von einem Befestigungselement, beispielsweise dem Befestigungsstift 42 durchfasst, sodass der Mittelabschnitt 45 durch das Befestigungselement mit dem Gehäuse 26 fest verbunden ist.

Die Ventileinrichtung 11 weist außerdem ein erstes Befestigungsmittel 52 auf, durch das das Stützelement 35, die Stützscheibe 44 und das freie Ende 48 des ersten Seitenabschnitts 46 fest miteinander verbunden sind. Außerdem weist die Ventileinrichtung 11 ein zweites Befestigungsmittel 53 auf, durch das das weitere Stützelement 135, die weitere Stützscheibe 144 und das freie Ende 49 des zweiten Seitenabschnitts 47 fest miteinander verbunden sind.

## Patentansprüche

1. Ventileinrichtung, mit einem Gehäuse (26), durch das zumindest ein Fluidpfad (27) führt, und mit einer dem Fluidpfad (27) zugeordneten Verschlusseinheit (29), wobei die Verschlusseinheit (29) ein Verschlusselement (30) aufweist, das bezogen auf eine Längsmittelachse (31) der Verschlusseinheit (30) axial verschiebbar gelagert ist, wobei ein Durchströmungsquerschnitt des Fluidpfads (27) in einer ersten Schiebestellung des Verschlusselementes (30) geschlossen und in einer zweiten Schiebestellung des Verschlusselementes (30) freigegeben ist, und wobei eine Rückstellfeder (34) zwischen dem Verschlusselement (30) einerseits und einem Stützelement (35) andererseits axial derart vorgespannt gehalten ist, dass das Verschlusselement (30) ausgehend von der ersten Schiebestellung entgegen einer Federkraft der Rückstellfeder (34) axial verschiebbar ist, wobei das Stützelement (35) axial verschiebbar gelagert ist, wobei ein Federelement (39) vorgesehen ist, das zwischen dem Stützelement (35) einerseits und dem Gehäuse (26) andererseits axial vorgespannt gehalten ist, und wobei eine Federkonstante des Federelementes (39) größer ist als eine Federkonstante der Rückstellfeder (34), **dadurch gekennzeichnet, dass** ein weiterer Fluidpfad (28) und eine dem weiteren Fluidpfad (28) zugeordnete weitere Verschlusseinheit (129) vorgesehen sind, wobei die weitere Verschlusseinheit (129) ein weiteres Stützelement (135) aufweist, wobei das Federelement (39) zwischen dem Stützelement (35) und dem weiteren Stützelement (135) einerseits und dem Gehäuse (26) andererseits axial vorgespannt gehalten ist.

2. Ventileinrichtung nach Anspruch 1, **dadurch gekennzeichnet, dass** das Verschlusselement (30) mit einem Magnetanker (32) gekoppelt ist, wobei die Verschlusseinheit (29) einen ansteuerbaren Elektromagnet (33) zur axialen Verlagerung des Magnetankers (32) aufweist.

3. Ventileinrichtung nach Anspruch 2, **dadurch gekennzeichnet, dass** der Elektromagnet (33) entgegen der Federkraft des Federelementes (39) axial verlagerbar ist.

4. Ventileinrichtung nach einem der vorhergehenden Ansprüche, **dadurch gekennzeichnet, dass** das Stützelement (35) einen Hülsenabschnitt (36) aufweist, wobei das Verschlusselement (30) und/oder der Magnetanker (32) in dem Hülsenabschnitt (36) axial verschiebbar gelagert sind.

5. Ventileinrichtung nach einem der vorhergehenden Ansprüche,
**gekennzeichnet durch** eine Stützscheibe (44), wobei sich das Stützelement (35) und/oder der Elektromagnet (32) mittels der Stützscheibe (44) axial an dem Federelement (39) abstützen.

6. Ventileinrichtung nach einem der vorhergehenden Ansprüche, **dadurch gekennzeichnet, dass** das Federelement (39) als Federplatte (39) ausgebildet ist.

7. Pumpenmodul, mit einer eine Fluidkammer (17) aufweisenden Pumpeneinrichtung (10) und mit einer Ventileinrichtung (11) gemäß einem der vorhergehenden Ansprüche, wobei die Fluidkammer (17) und die Ventileinrichtung (11) fluidtechnisch miteinander verbunden sind.

8. Pumpenmodul nach Anspruch 7, **dadurch gekennzeichnet, dass** ein Zulauf (23) der Fluidkammer (17) mit dem Fluidpfad (27) und ein Ablauf (24) der Fluidkammer (17) mit dem weiteren Fluidpfad (28) verbunden ist.

9. Abgasnachbehandlungssystem, mit einem Tank (3) für ein flüssiges Abgasnachbehandlungsmittel (4), mit einer Dosiereinrichtung (5), die dazu ausgebildet ist, das Abgasnachbehandlungsmittel (4) in eine Abgasleitung (2) eines Kraftfahrzeugs einzudosieren, und mit einem Pumpenmodul (9) gemäß einem der Ansprüche 7 und 8, wobei das Pumpenmodul (9) dazu ausgebildet ist, das Abgasnachbehandlungsmittel (4) von dem Tank (3) zu der Dosiereinrichtung (5) zu fördern.

## Claims

1. Valve assembly having a housing (26) through which at least one fluid path (27) leads, and having a closure unit (29) which is assigned to the fluid path (27), wherein the closure unit (29) has a closure element (30) which is mounted so as to be axially displaceable in relation to a longitudinal central axis (31) of the closure unit (30), wherein a flow cross section of the fluid path (27) is closed in a first sliding position of the closure element (30), and is released in a second sliding position of the closure element (30), and wherein a restoring spring (34) is held between the closure element (30) on one side and a support element (35) on the other side so as to be axially pre-loaded in such a manner that the closure element (30), proceeding from the first sliding position, is axially displaceable counter to a spring force of the restoring spring (34), wherein the support element (35) is mounted so as to be axially displaceable, wherein a spring element (39) which is held so as to be axially pre-loaded between the support element (35) on the one side and the housing (26) on the other side is provided, and wherein a spring rate of the spring element (39) is greater than a spring rate of the restoring spring (34), **characterized in that** a further fluid path (28) and a further closure unit (129) assigned to the further fluid path (28) are provided, wherein the further closure unit (129) has a further support element (135), wherein the spring element (39) is held so as to be axially pre-loaded between the support element (35) and the further support element (135) on the one side and the housing (26) on the other side.

2. Valve assembly according to Claim 1, **characterized in that** the closure element (30) is coupled to an armature (32), wherein the closure unit (29) has an actuatable solenoid (33) for axially displacing the armature (32).

3. Valve assembly according to Claim 2, **characterized in that** the solenoid (33) is axially displaceable counter to the spring force of the spring element (39).

4. Valve assembly according to one of the preceding claims, **characterized in that** the support element (35) has a sleeve portion (36), wherein the closure element (30) and/or the armature (32) are/is mounted so as to be axially displaceable in the sleeve portion (36).

5. Valve assembly according to one of the preceding claims, **characterized by** a support disc (44), wherein the support element (35) and/or the solenoid (32) are/is supported axially on the spring element (39) by means of the support disc (44).

6. Valve assembly according to one of the preceding claims, **characterized in that** the spring element (39) is designed as a spring plate (39).

7. Pump module with a pump assembly (10) having a fluid chamber (17), and having a valve assembly (11) according to one of the preceding claims, wherein the fluid chamber (17) and the valve assembly (11) are fluidically connected to one another.

8. Pump module according to Claim 7, **characterized in that** an inflow (23) of the fluid chamber (17) is connected to the fluid path (27), and an outflow (24) of the fluid chamber (17) is connected to the further fluid path (28).

9. Exhaust gas aftertreatment system having a tank (3) for a liquid exhaust gas aftertreatment agent (4), having a metering unit (5) which is designed to meter the exhaust gas aftertreatment agent (4) into an exhaust gas line (2) of a motor vehicle, and having a pump module (9) according to one of Claims 7 and 8, wherein the pump module (9) is designed to convey the exhaust gas aftertreatment agent (4) from the tank (3) to the metering unit (5).

## Revendications

1. Dispositif de soupape, avec un boîtier (26), à travers lequel passe au moins un chemin de fluide (27), et avec une unité d'obturation (29) associée au chemin de fluide (27), l'unité d'obturation (29) présentant un élément d'obturation (30), qui est monté de manière à pouvoir être coulissé axialement par rapport à un axe médian longitudinal (31) de l'unité d'obturation (30), une section transversale d'écoulement du chemin de fluide (27) étant fermée dans une première position de coulissement de l'élément d'obturation (30) et dégagée dans une deuxième position de coulissement de l'élément d'obturation (30), et un ressort de rappel (34) étant maintenu précontraint axialement entre l'élément d'obturation (30) d'une part et un élément d'appui (35) d'autre part, de telle sorte que l'élément d'obturation (30) peut être coulissé axialement à partir de la première position de coulissement à l'encontre d'une force de ressort du ressort de rappel (34), l'élément d'appui (35) étant monté de manière à pouvoir être coulissé axialement, un élément à ressort (39) étant prévu, qui est maintenu précontraint axialement entre l'élément d'appui (35) d'une part et le boîtier (26) d'autre part, et une constante de ressort de l'élément à ressort (39) étant supérieure à une constante de ressort du ressort de rappel (34), **caractérisé en ce qu'**il est prévu un autre chemin de fluide (28) et une autre unité d'obturation (129) associée à l'autre chemin de fluide (28), l'autre unité d'obturation (129) présentant un autre élément d'appui (135), l'élément à ressort (39) étant maintenu précontraint axialement entre l'élément d'appui (35) et l'autre élément d'appui (135) d'une part et le boîtier (26) d'autre part.

2. Dispositif de soupape selon la revendication 1, **caractérisé en ce que** l'élément d'obturation (30) est couplé à un induit magnétique (32), l'unité d'obturation (29) présentant un électroaimant (33) pouvant être commandé pour le déplacement axial de l'induit magnétique (32).

3. Dispositif de soupape selon la revendication 2, **caractérisé en ce que** l'électroaimant (33) peut être déplacé axialement à l'encontre de la force de ressort de l'élément à ressort (39).

4. Dispositif de soupape selon l'une quelconque des revendications précédentes, **caractérisé en ce que** l'élément d'appui (35) présente une section de manchon (36), l'élément d'obturation (30) et/ou l'induit magnétique (32) étant montés de manière à pouvoir être coulissés axialement dans la section de manchon (36).

5. Dispositif de soupape selon l'une quelconque des revendications précédentes, **caractérisé par** une rondelle d'appui (44), l'élément d'appui (35) et/ou l'électroaimant (32) s'appuyant axialement sur l'élément à ressort (39) au moyen de la rondelle d'appui (44).

6. Dispositif de soupape selon l'une quelconque des revendications précédentes, **caractérisé en ce que** l'élément à ressort (39) est réalisé sous forme de plaque de ressort (39).

7. Module de pompe, avec un dispositif de pompe (10) présentant une chambre de fluide (17) et avec un dispositif de soupape (11) selon l'une quelconque des revendications précédentes, la chambre de fluide (17) et le dispositif de soupape (11) étant reliés fluidiquement entre eux.

8. Module de pompe selon la revendication 7, **caractérisé en ce qu'**une entrée (23) de la chambre de fluide (17) est reliée au chemin de fluide (27) et une sortie (24) de la chambre de fluide (17) est reliée à l'autre chemin de fluide (28).

9. Système de post-traitement de gaz d'échappement, avec un réservoir (3) pour un agent de post-traitement de gaz d'échappement liquide (4), avec un dispositif de dosage (5) qui est réalisé pour doser l'agent de post-traitement de gaz d'échappement (4) dans une conduite d'échappement (2) d'un véhicule automobile, et un module de pompe (9) selon l'une quelconque des revendications 7 et 8, le module de pompe (9) étant réalisé pour transporter l'agent de post-traitement de gaz d'échappement (4) du réservoir (3) au dispositif de dosage (5).
